# EUROPEAN PATENT APPLICATION

(11) **EP 4 380 243 A1**
(43) Date of publication of application: **05.06.2024**
(21) Application number: 22855228.7
(22) Date of filing: 26.07.2022
(51) Int. Cl.: H04W 52/02, H04W 72/04, H04W 36/00

(54) **COMMUNICATION METHOD AND COMMUNICATION APPARATUS**

(30) Priority: 13.08.2021 CN 202110931012
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); LI, Bingzhao, Shenzhen, Guangdong 518129 (CN)
(74) Representative: Epping - Hermann - Fischer
(86) International application number: PCT/CN2022/107898
(87) International publication number: WO 2023/016245

(57) **Abstract**

This application discloses a communication method and a communication apparatus. The method includes: A terminal device receives wake-up information from a network device, and switches from a first state to a second state in response to the wake-up information. The wake-up information includes one or more of the following information: a first cell bar indication, a second cell bar indication, a resource configuration change indication, a resource configuration, and cell identification information. The first cell bar indication indicates whether a terminal device is allowed to select or reselect a cell. This application provides a new energy saving method. Before receiving the wake-up information, the terminal device does not perform other communication, to reduce energy consumption. In addition, the wake-up information may include cell bar indication information, so that the terminal device can select a suitable cell after the terminal device is waken up, and therefore communication efficiency is improved.

## Description

### CROSS-REFERENCE TO RELATED APPLICATIONS

This application claims priority to Chinese Patent Application No. 202110931012.6, filed with the China National Intellectual Property Administration on August 13, 2021 and entitled "COMMUNICATION METHOD AND COMMUNICATION APPARATUS", which is incorporated herein by reference in its entirety.

### TECHNICAL FIELD

This application relates to the field of energy-saving technologies, and in particular, to a communication method and a communication apparatus.

### BACKGROUND

In a long term evolution (long term evolution, LTE) system, to reduce energy consumption of a terminal device, a wake-up signal (wake-up signal, WUS) is introduced. To be specific, if a base station needs to page the terminal device on a paging occasion (paging occasion, PO), the base station sends a WUS before the PO, to wake up the terminal device. The terminal device may determine, by detecting the WUS, whether to detect a paging message. Compared with directly monitoring the paging message by the terminal device, monitoring the WUS by the terminal device can reduce a quantity of times or duration of monitoring a physical downlink control channel (physical downlink control channel, PDCCH), and therefore reduce power consumption of the terminal. However, to monitor the WUS, the terminal device needs to maintain synchronization with the base station, and receive a synchronization signal, a system message, and the like that are sent by the base station. In this case, the terminal device needs to be in a power supply state, and energy consumption of the terminal device is still large.

### SUMMARY

This application provides a communication method and a communication apparatus, to provide a new energy saving method, so that energy consumption of a terminal device may be reduced. According to a first aspect, a communication method is provided. The method may be performed by a first communication apparatus. The first communication apparatus may be a communication device or a communication apparatus, for example, a chip system, that can support a communication device in implementing a function required by the method. The following uses an example in which the communication device is a terminal device having a WUR capability for description. The method includes:
A terminal device receives wake-up information from a network device, and switches from a first state to a second state in response to the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification. In this solution, the network device needs to wake up the terminal device having the WUR capability, and only needs to send the wake-up information. The terminal device having the WUR capability monitors the wake-up information, and does not need to maintain a process such as synchronization with the network device, so that energy consumption of the terminal device may be reduced as much as possible. In addition, the wake-up information may carry other information, for example, cell bar indication information. The terminal device receives the wake-up information, and after being woken up, performs a corresponding operation such as cell reselection in a timely manner based on the cell bar indication information in the wake-up information, to improve communication efficiency.

In a possible implementation, the first state is a doze state, and the second state is an awake state. In a possible implementation, the method further includes: if the wake-up information includes the first cell bar indication, and the first cell bar indication indicates that access to a current cell of the terminal device is barred, the terminal device performs cell selection or cell reselection after switching to the second state. In this solution, the cell bar indication carried in the wake-up information may notify the terminal device whether the access to the current cell is allowed. Even if the terminal device does not perform cell measurement in the first state, the terminal device can determine whether to select or reselect another cell. In this way, when the terminal device switches to the second state, it can be ensured that access to a cell selected for camping on is allowed, thereby ensuring as much as possible that the terminal device accesses a network as early as possible.

In a possible implementation, the method further includes: if the wake-up information includes the second cell bar indication, and the second cell bar indication indicates that access to a current cell of the terminal device is barred, the terminal device performs cell selection or cell reselection after switching to the second state. In this solution, the cell bar indication carried in the wake-up information may notify the terminal device whether the current cell serves the terminal device having the WUR capability. Even if the terminal device having the WUR capability does not perform cell measurement in the first state, the terminal device can determine whether to select or reselect another cell. In this way, after switching to the second state, the terminal device having the WUR capability selects an appropriate cell to camp on in the timely manner.

In a possible implementation, the method further includes: the wake-up information includes the resource configuration change indication, and the terminal device obtains a WUR resource configuration after switching to the second state. In this solution, the wake-up information carries the resource configuration change indication, and even if in the first state, the terminal device can determine whether the WUR resource changes. In this way, when switching to the second state, the terminal device may obtain the WUR resource configuration in the timely manner, and determine the WUR resource based on the obtained WUR resource configuration, to receive related information on a determined WUR resource, and avoid missing the related information as much as possible.

In a possible implementation, the method further includes: the wake-up information includes the alarm information indication, and the terminal device obtains alarm information after switching to the second state. In this solution, if the alarm information changes, the wake-up information may include the alarm information indication. When the terminal device receives the wake-up information, the terminal device may consider that the alarm information changes. Therefore, the terminal device reads system information based on the wake-up information, and obtains the alarm information from a system message, to reduce impact on an application layer aspect.

In a possible implementation, the wake-up information further includes area information, where the area information includes TA information and/or RNA information. In this solution, the wake-up information may include the TA information and/or the RNA information, to indicate a radio access network area to which the terminal device belongs. The terminal device may update a stored radio access network area based on the area information in the wake-up information, so that the network device can page the terminal device.

In a possible implementation, the wake-up information further includes a first identifier, where the first identifier is an identifier of the terminal device, or the first identifier is a group identifier of the terminal device. In this solution, the wake-up information may include an identifier identifying the terminal device, to distinguish a terminal device that needs to be woken up.

In a possible implementation, the wake-up information further includes identification type information of the first identifier. The identification type information indicates that the first identifier is the identifier of the terminal device or the group identifier of the terminal device.

In a possible implementation, the wake-up information further includes length information of the first identifier.

According to a second aspect, a communication method is provided. The method may be performed by a second communication apparatus. The second communication apparatus may be a communication device or a communication apparatus, for example, a chip system, that can support a communication device in implementing a function required by the method. The following uses an example in which the communication device is a network device for description. The method includes:
The network device generates wake-up information, and sends the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification.

In a possible implementation, the wake-up information further includes area information, where the area information includes TA information and/or RNA information.

In a possible implementation, the wake-up information further includes a first identifier, where the first identifier is an identifier of the terminal device, or the first identifier is a group identifier of the terminal device.

In a possible implementation, the wake-up information further includes identification type information of the first identifier. The identification type information indicates that the first identifier is the identifier of the terminal device or the group identifier of the terminal device.

In a possible implementation, the wake-up information further includes length information of the first identifier.

For beneficial effects of the second aspect and the implementations of the second aspect, refer to the descriptions of the first aspect or the beneficial effects of the first aspect and the implementations of the first aspect.

According to a third aspect, an embodiment of this application provides a communication apparatus. The communication apparatus has a function of implementing a behavior in the method embodiment of the first aspect. For beneficial effects, refer to the descriptions of the first aspect. Details are not described herein again. The communication apparatus may be the terminal device in the first aspect, or the communication apparatus may be an apparatus, for example, a chip or a chip system, that can support the terminal device in the first aspect in implementing the function required by the method provided in the first aspect.

In a possible design, the communication apparatus includes a corresponding means (means) or module configured to perform the method in the first aspect. For example, the communication apparatus includes a processing unit (or sometimes referred to as a processing module) and/or a transceiver unit (or sometimes referred to as a transceiver module). These units (modules) may perform a corresponding function in the method example in the first aspect. For details, refer to the detailed descriptions in the method example. Details are not described herein again. According to a fourth aspect, an embodiment of this application provides a communication apparatus. The communication apparatus has a function of implementing a behavior in the method embodiment of the second aspect. For beneficial effects, refer to the descriptions of the second aspect. Details are not described herein again. The communication apparatus may be the network device in the second aspect, or the communication apparatus may be an apparatus, for example, a chip or a chip system, that can support the network device in the second aspect in implementing the function required by the method provided in the second aspect.

In a possible design, the communication apparatus includes a corresponding means (means) or module configured to perform the method in the second aspect. For example, the communication apparatus includes a processing unit (or sometimes referred to as a processing module) and/or a transceiver unit (or sometimes referred to as a transceiver module). These units (modules) may perform a corresponding function in the method example in the second aspect. For details, refer to the detailed descriptions in the method example. Details are not described herein again. According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

According to a sixth aspect, an embodiment of this application provides a communication apparatus. The communication apparatus includes an input/output interface and a logic circuit. The input/output interface is configured to input and/or output information. The logic circuit is configured to perform the method according to the first aspect or the second aspect.

According to a seventh aspect, an embodiment of this application provides a chip system. The chip system includes a processor, may further include a memory and/or a communication interface, and is configured to implement the method according to the first aspect or the second aspect. In a possible implementation, the chip system further includes a memory, configured to store program instructions and/or data. The chip system may include a chip, or may include a chip and another discrete device.

According to an eighth aspect, an embodiment of this application provides a communication system. The communication system includes the communication apparatus in the third aspect and the communication apparatus in the fourth aspect. Alternatively, the communication system includes the communication apparatus in the third aspect and the communication apparatus in the fifth aspect that is configured to perform the method according to the second aspect. Alternatively, the communication system includes the communication apparatus in the fourth aspect and the communication apparatus in the fifth aspect that is configured to perform the method according to the second aspect.

According to a ninth aspect, this application provides a computer-readable storage medium. The computer-readable storage medium stores a computer program. When the computer program is run, the method according to the first aspect or the second aspect is implemented.

According to a tenth aspect, a computer program product is provided. The computer program product includes computer program code. When the computer program code is run, the method according to the first aspect or the second aspect is performed.

For beneficial effects of the third aspect to the tenth aspect and the implementations of the third aspect to the tenth aspect, refer to descriptions of beneficial effects of any one of the first aspect and the second aspect and the possible implementations of any one of the first aspect and the second aspect.

### BRIEF DESCRIPTION OF DRAWINGS

FIG. 1 is a diagram of an example architecture of a communication system to which an embodiment of this application is applicable;
FIG. 2 is a schematic flowchart of a communication method according to an embodiment of this application;
FIG. 3 is a schematic diagram of a structure of a communication apparatus according to an embodiment of this application;
FIG. 4 is a schematic diagram of another structure of a communication apparatus according to an embodiment of this application;
FIG. 5 is a schematic diagram of another structure of a communication apparatus according to an embodiment of this application; and
FIG. 6 is a schematic diagram of another structure of another communication apparatus according to an embodiment of this application.

### DESCRIPTION OF EMBODIMENTS

To make objectives, technical solutions, and advantages of embodiments of this application clearer, the following clearly and completely describes technical solutions in embodiments of this application with reference to accompanying drawings in embodiments of this application.

To facilitate understanding of the technical solutions provided in embodiments of this application, some technical terms in embodiments of this application are first explained and described.
(1) A terminal device may be user equipment (user equipment, UE), and is sometimes also referred to as a terminal, an access station, a UE station, a remote station, a wireless communication device, a user apparatus, or the like. The terminal device is a device that has a wireless transceiver function, and may send a signal to a network device, or receive a signal from the network device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, a smart wearable, smart transportation, a smart city (smart city), an unscrewed aerial vehicle, and a robot.

The terminal device in embodiments of this application may be a mobile phone (mobile phone), a tablet computer (Pad), a computer with a wireless transceiver function, a VR terminal, an AR terminal, a wireless terminal in industrial control (industrial control), a wireless terminal in self-driving (self-driving), a smart speaker in an IoT network, a wireless terminal device in remote medical, a wireless terminal device in a smart grid, a wireless terminal device in transportation security, a wireless terminal device in a smart city, a wireless terminal device in a smart home, or the like. By way of example, and not limitation, in embodiments of this application, the terminal device may alternatively be a wearable device. The wearable device may also be referred to as a wearable intelligent device, an intelligent wearable device, or the like, and is a general name of wearable devices that are intelligently designed and developed for daily wear, for example, glasses, gloves, watches, clothes, and shoes, by using a wearable technology.

The terminal device may further include a relay (relay). Alternatively, it is understood as that any device that can perform data communication with a base station may be considered as the terminal device. If the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). In addition, in embodiments of this application, the terminal device may be an apparatus configured to implement a function of a terminal, or may be an apparatus, for example, a chip system, that can support the terminal device in implementing the function. The apparatus may be mounted in the terminal device. For example, the terminal device may alternatively be a vehicle detector. In this embodiment of this application, the chip system may include a chip, or may include a chip and another discrete device. In the technical solutions provided in embodiments of this application, the technical solutions provided in embodiments of this application are described by using an example in which the apparatus configured to implement the function of the terminal is the terminal device.

(2) The network device is an access device through which the terminal device accesses a mobile communication system in a wireless manner, and includes an access network (access network, AN) device, for example, a base station. The network device may alternatively be a device that communicates with the terminal device over an air interface. The network device may include an evolved NodeB (evolutional NodeB) in an LTE system or a long term evolution-advanced (long term evolution-advanced, LTE-A) system, which may be an eNB or an e-NodeB for short. The eNB is an apparatus, deployed in a radio access network, that meets a fourth generation (the fourth generation, 4G) mobile communication technology standard and that provides a wireless communication function for the terminal device. The network device may alternatively be a new radio controller (new radio controller, NR controller), a gNodeB (gNodeB, gNB) in a 5G system, a central network element (central unit), a new radio base station, a radio frequency remote module, a micro base station (also referred to as a small cell), a relay (relay), a distributed network element (distributed unit), a macro base station in various forms, a transmission reception point (transmission reception point, TRP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a wireless fidelity (wireless fidelity, Wi-Fi) access point (access point, AP), or the like. A specific technology and a specific device form used by the network device are not limited in embodiments of this application. The network device may correspond to the eNB in a 4G system, and correspond to the gNB in the 5G system.

In addition, the base station in embodiments of this application may include the central unit (central unit, CU) and the distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is only an example, and there may be division of another protocol layer. A radio frequency apparatus may be remotely disposed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.
(3) Discontinuous reception (discontinuous reception, DRX): In a DRX mechanism, the terminal device stops monitoring a PDCCH in a sleep time. The terminal device may periodically enter a sleep state, and does not need to monitor the PDCCH. DRX is implemented differently in the following three states: radio resource control (radio resource control, RRC) idle state, RRC inactive (inactive) state, and RRC connected (connected) state. DRX in the RRC idle state or the RRC inactive state is also referred to as IDLE DRX. In IDLE DRX, the terminal device mainly monitors a paging (paging) message, and the terminal device monitors a PO once in a DRX cycle (DRX cycle) (which may also be considered as a paging cycle). If the terminal device has service data transmission, the terminal device usually needs to enter the RRC connected state from the RRC idle state or the RRC inactive state.
(4) Wake-up radio (wake-up radio, WUR) may be understood as a function of reducing power consumption of the terminal device. In a Wi-Fi system, WUR means that a low power consumption (lower power, LP) interface is introduced for a station (Station, STA) based on a conventional 802.11 main module (main radio). In a cellular communication system such as new radio (new radio, NR), to reduce energy consumption of the terminal device, a wake-up module may be disposed in the terminal device, and a WUR function is implemented by using the wake-up module. The wake-up module may also be referred to as an LP module, a WUR module, a WUR interface, or a wake-up circuit. It may be understood that the terminal device further includes a main module, and the main module may usually be in a sleep mode. In the sleep mode, only the wake-up module works, and the main module enters an energy saving mode. This reduces energy consumption of the terminal device. After receiving wake-up information, the wake-up module may wake up the main module in the sleep mode, so that the terminal device leaves the sleep mode, and resumes communication with the base station. A specific structural relationship between the wake-up module and the main module is not limited in this application. The sleep mode may also become a first state. Details are described in the following.
(5) "At least one" means one or more, and "a plurality of" means two or more than two. "And/or" describes an association relationship between associated objects, and indicates that three relationships may exist. For example, A and/or B may indicate the following three cases: Only A exists, both A and B exist, and only B exists, where A and B may be singular or plural. A character "/" usually indicates an "or" relationship between the associated objects 44.. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are for distinguishing between a plurality of objects, but are not intended to limit an order, a time sequence, priorities, or importance of the plurality of obj ects. For example, a first cell bar indication and a second cell bar indication are merely used to distinguish between different types, but do not indicate different content, priorities, sending sequences, importance degrees, or the like of the two types.

The foregoing describes some technical terms used in embodiments of this application. The following describes technical features of embodiments of this application.

A network device may send a paging message to a terminal device in an RRC idle state, an RRC inactive state, or an RRC connected state. DRX in the RRC idle state or the RRC inactive state is also referred to as IDLE DRX. IDLE DRX is discontinuous reception of a terminal device in an idle state. When the terminal device is in the idle state, there is no RRC connection or a dedicated resource of the terminal device. Therefore, in IDLE DRX, the terminal device mainly monitors the paging message. An objective of discontinuous reception can be achieved provided that a cycle of the paging message is defined. The terminal device monitors a PO once in a DRX cycle (DRX cycle) (which may also be considered as a paging cycle).

The network device may send the paging message (paging message) to the terminal device by using a physical downlink shared channel (physical downlink shared channel, PDSCH) resource, and the network device indicates, by using a PDCCH scrambled by a network temporary identifier (paging radio network temporary identifier, P-RNTI) used for the paging message, the PDSCH resource for sending the paging message. The terminal device periodically monitors the PDCCH scrambled by the P-RNTI, and parses received downlink control information (downlink control information, DCI), to obtain a time-frequency location of a PDSCH. The terminal device parses the paging message at the time-frequency location, to obtain content included in the paging message.

It can be learned that in a process in which the terminal device monitors the paging message, a large quantity of blind detections, namely, blind detections on the DCI, need to be performed, and a large quantity of data storage and demodulation operations need to be performed. In this case, in this process, high power consumption is caused, and a battery life of the terminal device is shortened. This paging mechanism is not conducive to a terminal device having a low power consumption requirement. For example, a typical machine type communication (machine type communication, MTC) terminal device such as an enhanced machine type communication (enhanced MTC, eMTC) terminal device or a narrowband internet (narrowband internet of things, NB-IoT) terminal device usually has a high requirement on low power consumption. An MTC terminal device (for example, a smart water meter or a smart electricity meter) has features such as a small data transmission amount, a large quantity of terminal devices, and low power consumption, and is usually powered by a battery. In this paging mechanism, the terminal device needs to perform blind detection on the DCI, that is, periodically monitor the PDCCH, and power consumption is high.

To reduce energy consumption of the terminal device, a wake-up signal (wake-up signal, WUS) is introduced. If the network device needs to page the terminal device in a PO, the network device sends the WUS before the PO. The terminal device may determine, by detecting the WUS, whether to detect the paging message. Compared with directly monitoring the paging message by the terminal device, monitoring the WUS by the terminal device can reduce a quantity of times or duration of monitoring the PDCCH, so that power consumption of a terminal is reduced. However, to monitor the WUS, the terminal device needs to maintain processes such as synchronization with the network device, receiving a synchronization signal and a system message that are sent by the network device, receiving the WUS, and the like. These processes can be implemented only when the terminal device is in a power supply state. Therefore, power consumption of the terminal device is still large. To further reduce power consumption of the terminal device, a WUR module may be disposed in the terminal device. The WUR module can receive information without power supply.

Therefore, when the terminal device does not need to work, power supply to a functional module included in the terminal device, for example, a main module and the WUR module, may be disconnected, to reduce energy consumption of the terminal device as much as possible. In this embodiment of this application, the main module and the WUR module may be integrated together, or may be two independent modules.

The main module and the WUR module of the terminal device are in a power-off state, which is similar to that the terminal device is in a turn-off state. In this case, the terminal device receives only information (which is referred to as wake-up information in this specification) used to trigger wake-up of the main module of the terminal device, and may not receive some information from the network device. For example, the terminal device may not receive the paging message, a synchronization message, the system message, a reference signal, or the like from the network device. In addition, in this case, the terminal device does not perform an operation such as cell reselection or cell selection, or performs relaxed cell reselection. Compared with cell reselection in the idle state or an inactive state defined in an existing protocol, relaxed cell reselection means that a threshold for triggering cell reselection or triggering cell measurement is lower. This may cause that the terminal device cannot obtain cell access related information in a timely manner, thereby reducing communication efficiency of the terminal device, and even causing the terminal device to fail to perform normal communication.

In view of this, an embodiment of this application provides a new energy saving method. In the method, a network side may trigger, by using wake-up information, a terminal device having a WUR capability to switch to an awake state. The terminal device having the WUR capability monitors the wake-up information, and does not need to maintain a process such as synchronization with a network device, so that energy consumption of the terminal device may be reduced as much as possible. In addition, the wake-up information may carry other information, for example, cell bar indication information. A terminal device receives the wake-up information, and after being woken up, performs a corresponding operation such as cell reselection in a timely manner based on the cell bar indication information in the wake-up information, to improve communication efficiency.

The technical solutions provided in embodiments of this application may be applied to a 5G mobile communication system, for example, an NR system, or applied to an LTE system, or may be further applied to a next-generation mobile communication system or another similar communication system. The technical solutions provided in embodiments of this application may also be applied to an internet of things (internet of things, IoT) system, a narrowband internet of things (narrow band internet of things, NB-IoT) system, or the like, for example, a wireless fidelity (wireless fidelity, Wi-Fi)-based IoT network or a wearable Wi-Fi network. The wearable Wi-Fi network may be a Wi-Fi network formed by using the terminal device (for example, a mobile phone) as a virtual access point and an associated wearable device. An internet of things and a wearable Wi-Fi network device are powered by a small-capacity battery, and have requirements of ultra-low power consumption and a long battery life.

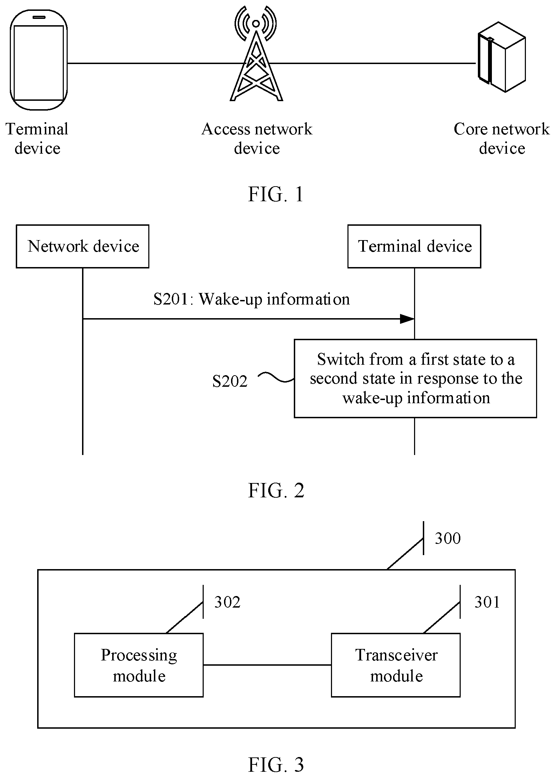

FIG. 1 is a diagram of an example architecture of a communication system to which an embodiment of this application is applicable. The communication system may include a core network device, a network device, and at least one terminal device. In FIG. 1, an example in which the at least one terminal device is one terminal device is used. The terminal device is connected to the network device in a wireless manner, and the network device is connected to the core network device in a wireless manner or a wired manner. The core network device and the network device may be different physical devices that are independent of each other; or functions of the core network device and logical functions of the network device are integrated into a same physical device; or some functions of the core network device and some functions of the network device are integrated into a same physical device. It should be noted that FIG. 1 is merely an example. Quantities of core network devices, network devices, and terminal devices included in the mobile communication system are not limited in embodiments of this application. In some embodiments, the communication system may further include another network device, for example, a wireless relay device or a wireless backhaul device.

In addition, the terminal device in this embodiment of this application may include a main module and a WUR module. That is, the terminal device in this embodiment of this application includes a terminal device having a WUR capability. The terminal device having the WUR capability may be considered as a terminal device using a WUR function. The terminal device having the WUR capability is also referred to as a terminal device having a WUS capability or a terminal device having a wake-up indication (wake-up indication, WUI) capability. The terminal device having the WUR capability is used as an example in this specification. In this embodiment of this application, wake-up information is also referred to as WUR information, a WUI, or a WUS.

The following describes the solutions provided in embodiments of this application with reference to the accompanying drawings.

Before the solutions provided in embodiments of this application are described, several statuses of a terminal device in embodiments of this application are first described. Statuses of the terminal device in embodiments of this application include an RRC idle state, an RRC inactive state, and an RRC connected state. The RRC idle state may be further classified into two statuses, for example, referred to as a first state and a second state. In the first state, the terminal device maintains registration with a core network and an AS configuration, receives wake-up information through only a WUR module, and does not perform idle-state behaviors such as downlink data receiving and measurement and cell reselection. Relatively, the second state may be considered as a normal idle state. In the second state, the terminal device may perform operations such as cell measurement, cell reselection, downlink common channel receiving, and paging. Specific names of the first state and the second state are not limited in embodiments of this application. For example, the first state is referred to as a doze (doze) state, and the second state is referred to as an awake (awake) state.

When the terminal device is in the first state, a behavior of the terminal device, that is, an operation that may be performed by the terminal device, has the following several cases.

Case A: The terminal device maintains registration and an air interface configuration with a core network device. The terminal device may perform one or more idle-state behaviors such as relaxed intra-frequency measurement, relaxed inter-frequency measurement, relaxed cell measurement, and relaxed cell reselection. Relaxed measurement means measurement performed at a longer cycle. For example, compared with intra-frequency measurement in an idle state or an inactive state defined in an existing protocol, a measurement cycle of the relaxed intra-frequency measurement is longer. Similarly, compared with inter-frequency measurement in the idle state or the inactive state defined in the existing protocol, a measurement cycle of the relaxed inter-frequency measurement is longer. It may be understood that, compared with cell measurement in the idle state or the inactive state defined in the existing protocol, a measurement cycle of the relaxed cell measurement is longer. Compared with cell reselection in the idle state or the inactive state defined in the existing protocol, in the relaxed cell reselection, a threshold for triggering cell reselection or triggering cell measurement is lower.

Case B: The terminal device receives only wake-up information, and does not receive one or more of the following information from a network device: a paging message, a synchronization message, a system message, a reference signal, and the like. For example, the terminal device may receive the wake-up information through the WUR module. In addition, the terminal device does not perform operations such as cell reselection or cell selection. Even if cell reselection is performed, relaxed cell reselection is performed.

Case C: In the first state of the RRC idle state, only when reference signal quality of a serving cell of the terminal device is greater than a threshold, the terminal device does not receive one or more of the following information from a network device: a paging message, a synchronization message, a system message, a reference signal, and the like, or performs relaxed intra-frequency measurement, relaxed inter-frequency measurement, and relaxed cell measurement. When the reference signal quality of the cell of the terminal device is less than the threshold, the terminal device may perform normal measurement, a cell selection or reselection process, and paging message receiving, that is, a behavior of the normal idle state.

It should be noted that the RRC inactive state may also be classified into a first state and a second state. A difference from a case in which the terminal device is in the first state of the RRC idle state lies in that when the terminal device is in the first state of the RRC inactive state, the terminal device further needs to maintain a related configuration of the inactive state. The second state of the RRC inactive state may be considered as a normal inactive state. In other words, in the second state of the RRC inactive state, the terminal device may perform a behavior of the terminal device in the RRC inactive state.

The foregoing uses an example in which the first state and the second state are two states of the RRC idle state or the RRC inactive state. In embodiments of this application, the first state and the second state are not limited to being states of the RRC idle state or the RRC inactive state. For example, the first state and the second state may alternatively be two states that are defined independently of the RRC idle state and the RRC inactive state. For example, statuses of the terminal device may include the first state, the second state, the RRC idle state, the RRC inactive state, and the RRC connected state.

FIG. 2 shows a communication method according to an embodiment of this application, and the method may be applied to the network architecture shown in FIG. 1. In addition, the method may be performed by two communication apparatuses. The two communication apparatuses are, for example, a first communication apparatus and a second communication apparatus. The first communication apparatus may be a network device or a communication apparatus that can support a network device in implementing a function required by the method, or may be a terminal device or a communication apparatus that can support a terminal device in implementing a function required by the method. Certainly, the first communication apparatus may alternatively be another communication apparatus, for example, a chip system. Similarly, the second communication apparatus may be a network device or a communication apparatus that can support a network device in implementing a function required by the method, or may be a terminal device or a communication apparatus that can support a terminal device in implementing a function required by the method. Certainly, the second communication apparatus may alternatively be another communication apparatus, for example, a chip system. Implementations of the first communication apparatus and the second communication apparatus are not limited. For example, the first communication apparatus may be a network device, and the second communication apparatus is a terminal device. Alternatively, the first communication apparatus is a network device, and the second communication apparatus is a communication apparatus that can support a terminal device in implementing a function required by the method.

For ease of description, the following uses an example in which the method is performed by a terminal device and a network device, namely, an example in which the first communication apparatus is the terminal device and the second communication apparatus is the network device. If this embodiment is applied to the network architecture shown in FIG. 1, the terminal device described below may be the terminal device in the network architecture shown in FIG. 1, and the network device described below may be the network device in the network architecture shown in FIG. 1. It should be noted that this embodiment of this application merely uses the example in which the method is performed by the terminal device and the network device, and the method is not limited to being performed by one terminal device.

S201: The network device sends wake-up information to the terminal device, and correspondingly, the terminal device receives the wake-up information from the network device.

The wake-up information may be used to wake up the terminal device in a first state, in other words, used to wake up the terminal device from the first state to a second state. A specific name of the wake-up information is not limited in this embodiment of this application. For example, the wake-up information may also be referred to as WUI. The wake-up information may be carried in one or more fields of RRC signaling. The one or more fields may be fields defined in the RRC signaling, or may be fields newly defined in the RRC signaling. Alternatively, the wake-up information may be carried in one or more fields of media access control control element (media access control control element, MAC CE) signaling or MAC layer signaling, and the one or more fields may be fields defined in the MAC CE signaling, or may be fields newly defined in the MAC CE signaling. Alternatively, the wake-up information may be carried in one or more fields of DCI signaling. The one or more fields may be fields defined in the DCI signaling, or may be fields newly defined in the DCI signaling. Alternatively, the wake-up information may be carried in at least two of the RRC signaling, the MAC CE signaling, and the DCI signaling. It may be understood that the wake-up information may alternatively be carried in newly defined signaling. This is not limited in this embodiment of this application.

S202: The terminal device switches from the first state to the second state in response to the wake-up information.

The terminal device receives the wake-up information, and switches from the first state to the second state. Then, the terminal device may perform operations such as intra-frequency or inter-frequency measurement, cell reselection, downlink common channel receiving, and a paging message.

The terminal device may not work normally after switching from the first state to the second state. For example, if the terminal device is in the first state and does not receive a system message, or cannot receive a broadcast message in a timely manner, the terminal device cannot learn whether a cell in which the terminal device is currently located can be accessed. If the cell in which the terminal device is currently located is not allowed to be accessed, but the terminal device switches to the second state and still chooses to access the cell, clearly, the terminal device cannot work normally. Therefore, in this embodiment of this application, the wake-up information may additionally carry some information, and the terminal device may perform a corresponding operation based on the information, to increase a probability of normal working of the terminal device as much as possible.

For example, the wake-up information may include one or more of the following information, to increase a probability that the terminal device can work normally. The following separately describes several types of possible information included in the wake-up information.
(1) Cell bar (cell bar) indication. The cell bar indication may indicate whether the terminal device is allowed to select or reselect a cell (for example, a first cell). Optionally, the cell bar indication further includes a cell identifier, to indicate whether access to the first cell is barred or allowed. Alternatively, the cell identifier may be an identifier of a cell that sends the access bar indication. If the cell bar indication indicates that the terminal device is not allowed to select or reselect the cell that sends the indication or the first cell, the terminal device may select or reselect another cell. It should be understood that the first cell may also be a serving cell of the terminal device or a cell on which the terminal device camps.

If the wake-up information includes the cell bar indication, and the cell bar indication indicates that access to a current cell of the terminal device is barred, the terminal device performs cell selection or cell reselection after switching to the second state. In other words, after switching to the second state, the terminal device may select a cell that is allowed to be accessed to camp on. Because the cell bar indication carried in the wake-up information may indicate whether the access to the current cell of the terminal device is allowed, although the terminal device in the first state does not perform cell measurement or receive the system message, the terminal device can also determine whether to select or reselect another cell. In this way, when the terminal device switches to the second state, it can be ensured that access to the cell that the terminal device chooses to camp on is allowed, so that a delay in accessing the cell by the terminal device is reduced, and communication efficiency is improved. If the terminal device in the first state can perform relaxed cell measurement or cell reselection, after receiving the wake-up information that includes the cell bar indication, the terminal device performs an operation such as cell measurement, to select a proper cell in a timely manner for camping on. It should be noted that after the terminal selects another cell, if the another cell also supports WUR, the terminal device may enter the first state again or continue to maintain the first state.

Optionally, the wake-up information may also include an intra-frequency cell reselection indication. The intra-frequency cell reselection indication may indicate whether the terminal device is allowed to perform intra-frequency cell reselection when the access to the current cell is barred. If the intra-frequency cell reselection indication indicates that the terminal device is allowed to perform intra-frequency cell reselection, the terminal device may select an intra-frequency cell when performing cell selection or reselection. Otherwise, the terminal device does not select an intra-frequency cell.

The cell bar indication in (1) may be applied to all types of terminal devices. In some embodiments, the network device may send a cell bar indication to a terminal device having a WUR capability. The cell bar indication for the terminal device having the WUR capability may be considered as a cell bar indication dedicated to the terminal device having the WUR capability (bar indication for WUR UE). For ease of description, in this specification, the cell bar indication commonly used for all terminal devices is referred to as a first cell bar indication. The cell bar indication dedicated to the terminal device having the WUR is referred to as a second cell bar indication.

(2) Second cell bar indication. The second cell bar indication may indicate whether a terminal device having a WUR capability is allowed to select or reselect a cell, for example, a first cell. If the second cell bar indication indicates that the terminal device having the WUR capability is not allowed to select or reselect a cell, the terminal device having the WUR capability may select or reselect another cell. For a terminal device having no WUR capability, the second cell bar indication does not take effect. Optionally, the second cell bar indication may also include a cell identifier, to indicate the first cell.

It may be understood that a difference between the second cell bar indication and the first cell bar indication lies in that the second cell bar indication is for the terminal device having the WUR capability. Therefore, for a behavior of the terminal device having the WUR capability after receiving the second cell bar indication, refer to a behavior of the terminal device having no WUR capability after receiving the first cell bar indication in (1). Details are not described herein again. It should be noted that, after receiving the second cell bar indication, the terminal device considers that the cell no longer serves the terminal device having the WUR capability. The terminal device having the WUR capability may stop using a WUR-related operation, that is, do not use a WUR function. For example, the terminal device having the WUR capability exits the first state, or enters the second state or a connected state, and performs a related operation as a terminal device having no WUR capability.

Optionally, the wake-up information may also include an intra-frequency cell reselection indication. The intra-frequency cell reselection indication may indicate whether the terminal device is allowed to perform intra-frequency cell reselection when access to a current cell is barred. If the intra-frequency cell reselection indication indicates that the terminal device is allowed to perform intra-frequency cell reselection, the terminal device may select an intra-frequency cell when performing cell selection or reselection. Otherwise, the terminal device is not allowed to select an intra-frequency cell. The intra-frequency cell reselection indication may be applied to all types of terminal devices, or may be applied only to the terminal device having the WUR capability. (3) Resource configuration change indication. The resource configuration change indication may indicate information related to a WUR resource configuration. For example, the resource configuration change indication may indicate that a WUR resource changes.

After receiving the resource configuration change indication, the terminal device may determine that the WUR resource changes. After switching to the second state, the terminal device may obtain the WUR resource configuration, and further determine a WUR resource. In this way, subsequent possible information is received on an obtained WUR resource. In some embodiments, the WUR resource configuration is carried in the system message. After switching to the second state, the terminal device may read the system message, to obtain the WUR resource configuration. Alternatively, the terminal device may enter a connected state, to obtain the WUR resource configuration from the network device. Because the wake-up information carries the resource configuration change indication, the terminal device can also determine, in the first state, whether the WUR resource changes. In this way, after switching to the second state, the terminal device may obtain the WUR resource configuration in a timely manner, and determine the WUR resource based on the obtained WUR resource configuration, to receive related information on the determined WUR resource. This avoids missing receiving of the related information as much as possible. Specifically, the WUR resource configuration may include at least one of the following configurations: frequency information, rate information, coverage information, or the like. (4) Resource configuration. The resource configuration may indicate a WUR resource.

Similar to (3), in the first state, the terminal device does not monitor other information, and cannot determine whether a WUR resource changes. If the WUR resource changes, the wake-up information may include a resource configuration of the WUR resource. The terminal device receives the wake-up information, and may consider by default that the resource configuration in the wake-up information is the latest. Therefore, the terminal device receives information based on the resource configuration in the wake-up information, to avoid loss of related information as much as possible. Specifically, the resource configuration of the WUR resource may include at least one of the following configurations: frequency information, rate information, coverage information, or the like.
(5) Cell identification information. The cell identification information may indicate an identifier of a cell to which the terminal device belongs, namely, a cell within coverage of the network device. In the first state, the terminal device may move out of a cell in which the terminal device is currently located. However, the terminal device does not know. Therefore, the network device may notify the terminal device of the cell in which the terminal device is currently located. For example, the wake-up information includes the cell identification information, to indicate the identifier of the cell to which the terminal device belongs. For example, the terminal device receives the cell identification information and a first cell bar indication, and may determine whether access to the cell indicated by the cell identification information is barred, to help exclude the cell indicated by the cell identification information during cell selection or reselection. For another example, the terminal device receives the cell identification information and a second cell bar indication, and may determine whether access to the cell indicated by the cell identification information is barred, to help exclude the cell indicated by the cell identification information during cell selection or reselection. It may be understood that, if the first cell bar indication indicates that the terminal device is not allowed to select or reselect the cell indicated by the cell identification information, the terminal device excludes the cell indicated by the cell identification information when performing cell selection or reselection. It may be understood that, if the second cell bar indication indicates that the terminal device is not allowed to select or reselect the cell indicated by the cell identification information, the terminal device excludes the cell indicated by the cell identification information when performing cell selection or reselection.
(6) Alarm information indication. Alarm information may include earthquake and tsunami warning system (earthquake and tsunami warning system, ETWS) information, and may further include commercial mobile alert system (commercial mobile alert system, CMAS) information. The alarm information indication may indicate an alarm information notification (indication of ETWS/CMAS notification). It may also be considered that the alarm information indication may indicate that there is alarm information or that alarm information changes. Alternatively, the alarm information indication may indicate the terminal device to receive the alarm information.

In the first state, the terminal device does not monitor other information. Even if the alarm information changes, the terminal device does not know. In this embodiment of this application, if the alarm information changes, the wake-up information may include the alarm information indication. When the terminal device receives the wake-up information, the terminal device may consider that the alarm information changes. Therefore, the terminal device reads system information based on the wake-up information, and obtains the alarm information from the system message, for example, obtains the ETWS information and/or the CMAS information, to reduce impact on an application layer aspect. (7) Area information. The area information includes tracking area (tracking area, TA) information and/or RAN-based notification area (RAN-based notification area, RNA) information.

The terminal device may move out of a TA or an RNA. If the terminal device is in the first state, the network device or a core network device does not know even if the terminal device moves out of the TA or the RNA. If the network device still wakes up the terminal device based on the TA or the RNA in which the terminal device is previously located, the network device cannot wake up the terminal device.

Therefore, the wake-up information may include the TA information and/or the RNA information, to indicate a radio access network area to which the terminal device belongs. After receiving the wake-up information, the terminal device may determine whether a stored radio access network area is consistent with the area indicated by the area information. If the radio access network area stored by the terminal device is inconsistent with the area indicated by the area information, it may be considered that the terminal device moves out of the TA or the RNA. In this case, the terminal device may update the stored radio access network area to the area indicated by the area information. The network device may wake up, by default, the terminal device based on the area indicated by the area information. Alternatively, further, after determining that the TA changes, the terminal device may initiate a TA update procedure to the core network device. For example, the terminal device sends a TA update message to the network device, and the network device receives the TA update message, forwards the TA update message to the core network device, and indicates a TA identifier in which the network device is located. The core network device obtains a TA in which the terminal device is located, and sends a TA update response message or a TA update accept response message to the terminal device. Similarly, when determining that the RNA changes, the terminal initiates an RNA update procedure. That is, the terminal device initiates a connection access request or a connection recovery request to the network device, where the request includes an access reason for an RNA update, and the network device determines a latest RNA of the terminal device based on the connection access request or the connection recovery request. That is, after receiving the TA or RNA information, if the terminal determines that the TA or RNA information is inconsistent with stored TA or RNA information, the terminal exits the first state, or enters a connected state, to initiate an update procedure. (8) Terminal device identification information.

There may be a plurality of terminal devices within coverage of the network device. Some terminal devices need to be woken up, and some terminal devices do not need to be woken up. Therefore, the wake-up information may include an identifier of the terminal device, to identify a terminal device that needs to be woken up. In some embodiments, the identifier of the terminal device may be an identifier (identifier, ID) of the terminal device, or may be a predefined or configured identifier. For example, there are four terminal devices within coverage of the network device. The four terminal devices are a terminal device 1, a terminal device 2, a terminal device 3, and a terminal device 4. If the terminal device 3 needs to be woken up, the wake-up information may include a first identifier, and the first identifier may be an identifier of the terminal device 3. The terminal device 3 receives the wake-up information, and switches from the first state to the second state based on the first identifier, to implement a function in an RRC inactive state. Alternatively, the terminal device 3 may switch from the first state to a connected state, and does not need to switch from an RRC active state to the connected state. This improves communication efficiency. Considering that there are a plurality of terminal devices, if the plurality of terminal devices are woken up simultaneously, the wake-up information carries a large quantity of identities, and signaling overheads are high. Therefore, an identifier included in the wake-up information may also be an identifier of a group to which the terminal device belongs (a group identifier of the terminal device for short). The group identifier of the terminal device may be a predefined or allocated identifier. The foregoing example is still used. It is assumed that the terminal device 1 and the terminal device 2 are located in a group 1, and the terminal device 3 and the terminal device 4 are located in a group 2. If the terminal device 3 and the terminal device 4 need to be woken up, the wake-up information may include the first identifier, and the first identifier may be an identifier of the group 2. The terminal device 3 and the terminal device 4 receive the wake-up information, and switch from the first state to the second state based on the first identifier.

The terminal device may determine whether the identifier included in the wake-up information is consistent with the identifier of the terminal device, and if the identifier included in the wake-up information is consistent with the identifier of the terminal device, it may be determined that the wake-up information is used to wake up the terminal device. Considering that the identifier of the terminal device may be the same as the group identifier of the terminal device, to distinguish the identifier of the terminal device from the group identifier of the terminal device, the wake-up information may further include identification type information, to indicate whether the identifier included in the wake-up information is the identifier of the terminal device or the group identifier of the terminal device.

In an alternative solution, the wake-up information may further include length information of an identifier, or length information related to an identification type, and a type of the identifier included in the wake-up information is distinguished by using the length information. For example, a length of the identifier of the terminal device that needs to be woken up is a first length, and a length of an identifier of a terminal device that does not need to be woken up is a second length. For example, the length of the identifier of the terminal device that needs to be woken up is n bits, and the length of the identifier of the terminal device that does not need to be woken up is m bits. The identifier of the terminal device that needs to be woken up may be a predefined identifier, for example, may be a part of the ID of the terminal device, or may be another identifier. The terminal device receives the wake-up information, and may determine whether the length information of the identifier included in the wake-up information and specific content of a corresponding identifier are consistent with information of the identification type of the terminal device. If the length information and identifier content indicated by the wake-up information are consistent with the identifier of the terminal device, the terminal device determines that the wake-up information is used to wake up the terminal device. That is, the terminal device may switch from the first state to the second state, or enter the connected state. It should be noted that, that the terminal device determines whether the identities are consistent or the same is actually comparing whether a received identifier is consistent or the same as an identifier stored by the terminal device. When a quantity of terminal devices in a network is small, an identifier with a short length may be configured for the terminal device. In this way, a wake-up information transmission delay is low, so that a network side can wake up more terminal devices in a short time. When there are a large quantity of terminal devices in a network, an identifier with a long length may be configured for the terminal device, so that each terminal device is uniquely identified. For example, there are five terminal devices in the network, and the wake-up information may be used to configure short identities for the five terminal devices, for example, identities occupying 3 bits. For a terminal device 1 in the five terminal devices, the wake-up information may include a first identifier and length information of the first identifier, and the first identifier is an identifier of the terminal device 1. The length information of the first identifier indicates that a length of the first identifier is 3 bits. It is assumed that there are 20 terminal devices in the network, and the wake-up information may be used to configure long identities for the 10 terminal devices, for example, identities occupying 5 bits. For a terminal device 1 in the 20 terminal devices, the wake-up information may include a first identifier and length information of the first identifier, and the first identifier is an identifier of the terminal device 1. The length information of the first identifier indicates that a length of the first identifier is 5 bits.

The terminal device may store a plurality of sets of identification information, and each set of identification information may include the identifier of the terminal device and information indicating the identification type. For example, the terminal device includes two sets of identification information. One set of identification information includes the identifier of the terminal device and the information of the identification type. The other set of identification information includes the identifier of the terminal device and length information of the identifier. In a possible implementation, a dedicated wake-up identifier may be defined. In this case, the identification type does not need to be additionally indicated, thereby further reducing signaling overheads. For example, the dedicated wake-up identifier may be a serving-temporary mobile subscriber identifier (serving-temporary mobile subscriber identifier, S-TMSI). After receiving the wake-up information, the terminal device may determine whether an S-TMSI carried in the wake-up information is consistent with an S-TMSI of the terminal device. If the S-TMSI carried in the wake-up information is consistent with the S-TMSI of the terminal device, the terminal device determines that the wake-up information is used to wake up the terminal device. That is, the terminal device switches from the first state to the second state.

The wake-up information may include any one or more of information in the foregoing (1) to (8). For example, the wake-up information may include the first cell bar indication, and the identification information of the terminal device. For another example, the wake-up information may include the area information and the identification information of the terminal device. For another example, the wake-up information may include the area information, the identification information of the terminal device, and the alarm information indication. The examples are not listed one by one herein.

It should be noted that in this embodiment of this application, an example in which the terminal device switches from the first state to the second state in response to the received wake-up information is used. It may be understood that, the wake-up information received by the terminal device includes any one or more of the foregoing (1) to (8), and the terminal device may perform a corresponding operation regardless of a status of the terminal device. For example, in some embodiments, after receiving the wake-up information, the terminal may enter the connected state from the first state, but does not enter the second state, and the terminal device may perform an operation of the connected state. In some other embodiments, after receiving the wake-up information, the terminal may keep in the first state, and perform a corresponding operation. For example, the wake-up information includes the first cell bar indication, and the terminal device may perform relaxed cell measurement.

In this embodiment of this application, when the network device needs to wake up the terminal device having the WUR capability, the network device only needs to send the wake-up information. The terminal device having the WUR capability monitors the wake-up information, and does not need to maintain a process such as synchronization with the network device, so that energy consumption of the terminal device may be reduced as much as possible. The wake-up information may carry other information, and after being woken up, the terminal device may perform a corresponding operation based on the information in the wake-up information, to improve communication efficiency of the terminal device as much as possible. For example, the wake-up information includes cell bar indication information. After receiving the wake-up information, the terminal device may perform a corresponding operation such as cell reselection in a timely manner based on the cell bar indication information. Consequently, this improves communication efficiency.

The foregoing embodiments provided in this application separately describe the method provided in the embodiments of this application from a perspective of interaction between the terminal device and the network device. The steps performed by the network device may also be separately implemented by different communication apparatuses. For example, a first apparatus is configured to generate the wake-up information, and a second apparatus is configured to send the wake-up information. In other words, the first apparatus and the second apparatus jointly complete a step performed by the network device in embodiments of this application. A specific division manner is not limited in this application. When the network architecture includes one or more DUs, one or more CUs, and one or more radio frequency units (radio units, RUs), the steps performed by the network device may be separately implemented by the DU, the CU, and the RU. To implement functions in the method provided in the foregoing embodiments of this application, the terminal device and the network device may include a hardware structure and/or a software module, and the foregoing functions are implemented in a form of a hardware structure, a software module, or a hardware structure plus a software module. Whether a function in the foregoing functions is performed by using the hardware structure, the software module, or a combination of the hardware structure plus the software module depends on particular applications and design constraints of the technical solutions.

An embodiment of this application provides a communication apparatus. The following describes, with reference to the accompanying drawings, communication apparatuses configured to implement the foregoing methods in embodiments of this application.

FIG. 3 is a possible example block diagram of a communication apparatus in this application. A communication apparatus 300 may correspondingly implement a function or a step implemented by the terminal device or the network device in the foregoing method embodiments. The communication apparatus may include a transceiver module 301 and a processing module 302. Optionally, the communication apparatus may further include a storage module. The storage module may be configured to store instructions (code or a program) and/or data. The transceiver module 301 and the processing module 302 may be coupled to the storage module. For example, the processing module 302 may read the instructions (the code or the program) and/or the data in the storage module, to implement a corresponding method. The foregoing modules may be disposed independently, or may be partially or all integrated.

It should be understood that the processing module 302 may be a processor or a controller, for example, may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 302 may implement or execute various example logical blocks, modules, and circuits described with reference to content disclosed in this application. Alternatively, the processor may be a combination of processors implementing a computing function, for example, a combination of one or more microprocessors or a combination of the DSP and a microprocessor. The transceiver module 301 is an interface circuit of the apparatus, configured to receive a signal from another apparatus. For example, when the apparatus is implemented in a form of a chip, the transceiver module 301 is an interface circuit used by the chip to receive a signal from another chip or apparatus, or is an interface circuit used by the chip to send a signal to another chip or apparatus.

The communication apparatus 300 may be the network device or the terminal device in the foregoing embodiments, or may be a chip used for the network device or the terminal device. For example, when the communication apparatus 300 is the network device or the terminal device, the processing module 302 may be, for example, a processor, and the transceiver module 301 may be, for example, a transceiver. Optionally, the transceiver may include a radio frequency circuit, and the storage unit may be, for example, a memory. For example, when the communication apparatus 300 is the chip used for the network device or the terminal device, the processing module 302 may be, for example, a processor, and the transceiver module 301 may be, for example, an input/output interface, a pin, or a circuit. The processing module 302 may execute computer-executable instructions stored in the storage unit. Optionally, the storage unit is a storage unit in the chip, for example, a register or a buffer. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some possible implementations, the communication apparatus 300 can correspondingly implement a behavior and a function of the terminal device in the foregoing method embodiments. For example, the communication apparatus 300 may be the terminal device, or may be a component (for example, a chip or a circuit) used in the terminal device. The transceiver module 301 may be configured to support communication between the terminal device and another network entity, for example, support communication between the terminal device and the network device shown in FIG. 2. The processing module 302 is configured to control and manage an action of the terminal device. For example, the processing module 302 is configured to support the terminal device in performing all operations, other than sending and receiving operations, of the terminal device in FIG. 2. The transceiver module 301 may be configured to perform all receiving or sending operations performed by the terminal device in the embodiment shown in FIG. 2, for example, S201 in the embodiment shown in FIG. 2, and/or another process used to support the technology described in this specification. The processing module 302 is configured to perform all operations, other than the receiving and sending operations, performed by the terminal device in the embodiment shown in FIG. 2, and/or another process used to support the technology described in this specification.

In some embodiments, the transceiver module 301 is configured to receive wake-up information from the network device. The processing module 302 is configured to switch from a first state to a second state in response to the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification.

In an optional implementation, the first state is a doze state, and the second state is an awake state. In an optional implementation, the processing module 302 is further configured to: if the wake-up information includes the first cell bar indication, and the first cell bar indication indicates that access to a current cell of the terminal device is barred, the terminal device performs cell selection or cell reselection after switching to the second state.

In an optional implementation, the processing module 302 is further configured to: if the wake-up information includes the second cell bar indication, and the second cell bar indication indicates that access to a current cell of the terminal device is barred, the terminal device performs cell selection or cell reselection after switching to the second state.

In an optional implementation, the processing module 302 is further configured to: if the wake-up information includes the resource configuration change indication, the terminal device obtains a WUR resource configuration after switching to the second state.

In an optional implementation, the processing module 302 is further configured to: if the wake-up information includes the alarm information indication, the terminal device obtains alarm information after switching to the second state.

In an optional implementation, the wake-up information further includes area information, and the area information includes TA information and/or RNA information.

In an optional implementation, the wake-up information further includes a first identifier, where the first identifier is an identifier of the terminal device, or the first identifier is a group identifier of the terminal device.

In an optional implementation, the wake-up information further includes identification type information of the first identifier. The identification type information indicates that the first identifier is the identifier of the terminal device or the group identifier of the terminal device.

In an optional implementation, the wake-up information further includes length information of the first identifier.

In some possible implementations, the communication apparatus 300 can correspondingly implement a behavior and a function of the network device in the foregoing method embodiments. For example, the communication apparatus 300 may be the network device, or may be a component (for example, a chip or a circuit) used in the network device. The transceiver module 301 may be configured to support communication between the network device and another network entity, for example, support communication between the network device and the terminal device shown in FIG. 2. The processing module 302 is configured to control and manage an action of the network device. For example, the processing module 302 is configured to support the network device in performing all operations, other than the sending and receiving operations, in FIG. 2. For example, the transceiver module 301 may be configured to perform all receiving or sending operations performed by the network device in the embodiment shown in FIG. 2, for example, S201 in the embodiment shown in FIG. 2, and/or another process used to support the technology described in this specification. The processing module 302 is configured to perform all operations, other than the sending and receiving operations, performed by the network device in the embodiment shown in FIG. 2, for example, S202 in the embodiment shown in FIG. 2, and/or another process used to support the technology described in this specification.

In some embodiments, the processing module 302 is configured to generate wake-up information. The transceiver module 301 is configured to send the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification.

In an optional implementation, the wake-up information further includes area information, and the area information includes TA information and/or RNA information, so that the network device can page the terminal device.

In an optional implementation, the wake-up information further includes a first identifier, where the first identifier is an identifier of the terminal device, or the first identifier is a group identifier of the terminal device.

In an optional implementation, the wake-up information further includes identification type information of the first identifier. The identification type information indicates that the first identifier is the identifier of the terminal device or the group identifier of the terminal device.

In an optional implementation, the wake-up information further includes length information of the first identifier.

It should be understood that the processing module 302 in this embodiment of this application may be implemented by a processor or a processor-related circuit component, and the transceiver module 301 may be implemented by a transceiver or a transceiver-related circuit component.

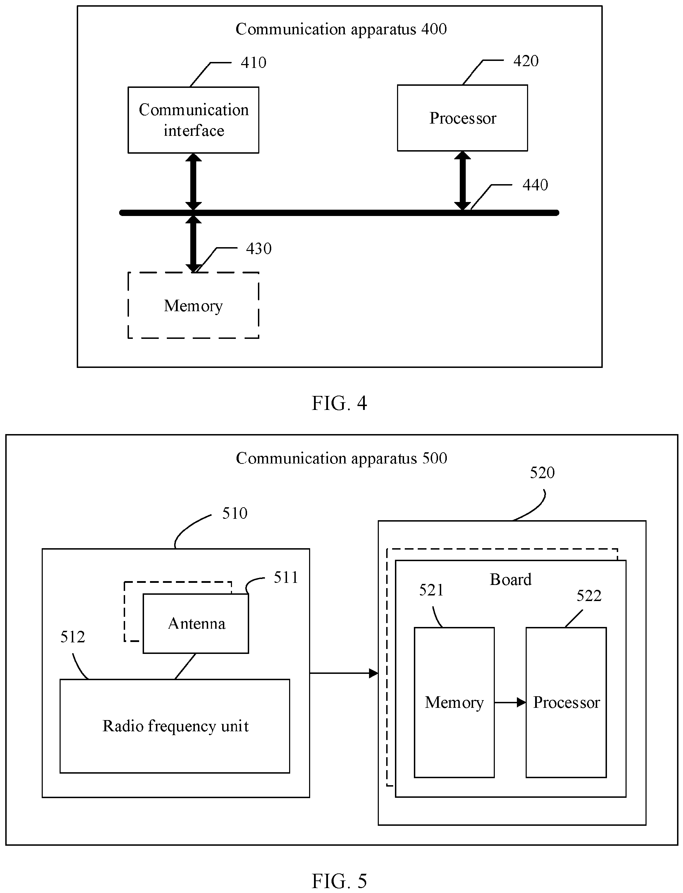

FIG. 4 shows a communication apparatus 400 according to an embodiment of this application. The communication apparatus 400 may be a network device or a terminal device, or the communication apparatus 400 may be an apparatus that can support the network device or the terminal device in implementing a corresponding function in the method provided in embodiments of this application. The communication apparatus 400 may be a chip system. In this embodiment of this application, the chip system may include a chip, or may include a chip and another discrete device.

In hardware implementation, the transceiver module 301 may be a transceiver, and the transceiver is integrated in the communication apparatus 400, to constitute a communication interface 410. The communication apparatus 400 includes at least one processor 420. The processor 420 may be a CPU, a microprocessor, an ASIC, or one or more integrated circuits configured to control program execution of the solutions in this application, and is configured to implement or support the communication apparatus 400 in implementing a function of the network device or the terminal device in the method provided in embodiments of this application. For details, refer to the detailed descriptions in the method examples. Details are not described herein again.

If the communication apparatus 400 is configured to implement a function of the terminal device in embodiments of this application, the communication interface 410 may be configured to receive wake-up information from the network device. The processor 420 is configured to switch from a first state to a second state in response to the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification. The alarm information notification may also be considered as alarm information, or that the alarm information changes. Alternatively, the alarm information notification may indicate the terminal device to receive the alarm information.

If the communication apparatus 400 is configured to implement a function of the network device in embodiments of this application, the processor 420 may be configured to generate wake-up information. The communication interface 410 may be configured to send the wake-up information. The wake-up information includes one or more of the following information: a first cell bar indication, a second cell bar indication, a resource configuration change indication, a resource configuration, cell identification information, and an alarm information indication. The first cell bar indication indicates whether a terminal device is allowed to select or reselect a cell. The second cell bar indication indicates whether a terminal device having a WUR capability is allowed to select or reselect a cell. The resource configuration change indication indicates that a WUR resource changes. The resource configuration indicates the WUR resource. The cell identification information indicates an identifier of a cell to which the terminal device belongs. The alarm information indication indicates an alarm information notification, or may be considered to indicate the terminal device to receive alarm information.

The communication apparatus 400 may further include at least one memory 430, configured to store a computer program and/or data. The memory 430 is coupled with the processor 420. The coupling in this embodiment of this application may be an indirect coupling or a communication connection between apparatuses, units, or modules in an electrical form, a mechanical form, or another form, and is used for information exchange between the apparatuses, the units, or the modules. The processor 420 and the memory 430 may perform an operation cooperatively. The processor 420 may execute the program instructions and/or the data stored in the memory 430, so that the communication apparatus 400 implements a corresponding method. At least one of the at least one memory may be included in the processor 420.

The communication apparatus 400 may further include the communication interface 410, configured to communicate with another device or a communication network, for example, a RAN, a wireless local area network (wireless local area network, WLAN), or a wired access network, through any transceiver-type apparatus. The communication interface 410 is configured to communicate with another device by using a transmission medium so that an apparatus in the communication apparatus 400 may communicate with the another device. For example, when the communication apparatus 400 is the network device, the another device is the terminal device; or when the communication apparatus is the terminal device, the another device is the network device. The processor 420 may send and receive data by using the communication interface 410. The communication interface 410 may be specifically a transceiver.

A specific connection medium between the communication interface 410, the processor 420, and the memory 430 is not limited in this embodiment of this application. In this embodiment of this application, the memory 430, the processor 420, and the communication interface 410 are connected to each other by using a bus 440 in FIG. 4. The bus is represented by using a bold line in FIG. 4. A connection manner between other components is merely an example for description, and is not limited thereto. The bus may include an address bus, a data bus, a control bus, and the like. For ease of representation, only one bold line represents the bus in FIG. 4, but this does not mean that there is only one bus or only one type of bus.

In this embodiment of this application, the processor 420 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. The memory 430 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a blue-ray optical disc, or the like), a magnetic disk storage medium or another magnetic storage device, or any other computer-accessible medium that can be used to carry or store expected program code in an instruction or data structure form. However, this is not limited thereto. The memory may exist independently, and is connected to the processor by using the communication line 440. The memory may alternatively be integrated with the processor.

The memory 430 is configured to store computer-executable instructions for executing the solutions of this application, and the processor 420 controls the execution. The processor 420 is configured to execute the computer-executable instructions stored in the memory 430, to implement the communication methods provided in the foregoing embodiments of this application. Optionally, the computer-executable instructions in this embodiment of this application may also be referred to as application program code. This is not specifically limited in this embodiment of this application.

It should be noted that the communication apparatus in the foregoing embodiment may be the terminal device, may be a circuit, or may be a chip applied to the terminal device, or another combined device, component, or the like that has the functions of the terminal device. When the communication apparatus is the terminal device, the transceiver module may be a transceiver, and may include an antenna, a radio frequency circuit, and the like; and the processing module may be a processor, for example, a CPU. When the communication apparatus is a component that has the functions of the terminal device, the transceiver module may be a radio frequency unit, and the processing module may be a processor. When the communication apparatus is the chip system, the communication apparatus may be an FPGA, a dedicated ASIC, a system on chip (system on chip, SoC), a CPU, a network processor (network processor, NP), a DSP, a microcontroller (micro controller unit, MCU), a programmable logic device (programmable logic device, PLD), or another integrated chip. The processing module 302 may be a processor of the chip system. The transceiver module 301 or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

For example, the communication apparatus in the foregoing embodiment may be a chip. The chip includes a logic circuit and an input/output interface, and may further include a memory. The input/output interface may be configured to receive code instructions (where the code instructions are stored in the memory, and may be directly read from the memory, or may be read from the memory through another device) and transmit the code instructions to the logic circuit. The logic circuit may be configured to run the code instructions to perform the method in the foregoing method embodiment. Alternatively, the input/output interface may be a signal transmission interface circuit between the logic circuit and the transceiver machine.

FIG. 5 is a simplified schematic diagram of a structure of a communication apparatus. For ease of understanding and illustration, an example in which the communication apparatus is a base station is used in FIG. 5. The base station may be used in the system shown in FIG. 1, may be the network device in FIG. 1, and performs a function of the network device in the foregoing method embodiments.

The communication apparatus 500 may include a transceiver 510, a memory 521, and a processor 522. The transceiver 510 may be used by the communication apparatus to perform communication, for example, configured to send or receive the foregoing indication information. The memory 521 is coupled to the processor 522, and may be configured to store a program and data that are necessary for the communication apparatus 500 to implement functions. The processor 522 is configured to support the communication apparatus 500 in performing a corresponding function in the foregoing method. The function may be implemented by invoking the program stored in the memory 521.

Specifically, the transceiver 510 may be a wireless transceiver, and may be configured to support the communication apparatus 500 in receiving and sending signaling and/or data by using a wireless air interface. The transceiver 510 may also be referred to as a transceiver unit or a communication unit. The transceiver 510 may include one or more radio frequency units 512 and one or more antennas 511. The radio frequency unit, for example, a remote radio unit (remote radio unit, RRU) or an active antenna unit (active antenna unit, AAU), may be specifically configured to transmit a radio frequency signal and perform conversion between the radio frequency signal and a baseband signal. The one or more antennas may be specifically configured to radiate and receive the radio frequency signal. Optionally, the transceiver 510 may include only the foregoing radio frequency unit. In this case, the communication apparatus 500 may include the transceiver 510, the memory 521, the processor 522, and an antenna.

The memory 521 and the processor 522 may be integrated together, or may be independent of each other. As shown in FIG. 5, the memory 521 and the processor 522 may be integrated into a control unit 520 of the communication apparatus 500. For example, the control unit 520 may include a BBU of an LTE base station, and the baseband unit may also be referred to as a digital unit DU. Alternatively, the control unit 520 may include a DU and/or a central unit CU in a base station in 5G and a future radio access technology. The control unit 520 may include one or more antenna panels. A plurality of antenna panels may jointly support a radio access network (for example, an LTE network) of a single access standard, or a plurality of antenna panels may separately support radio access networks (for example, an LTE network, a 5G network, or another network) of different access standards. The memory 521 and the processor 522 may serve the one or more antenna panels. In other words, the memory 521 and the processor 522 may be separately disposed on each antenna panel. Alternatively, the plurality of antenna panels may share a same memory 521 and a same processor 522. In addition, a necessary circuit may be disposed on each antenna panel. For example, the circuit may be configured to implement coupling between the memory 521 and the processor 522. The transceiver 510, the processor 522, and the memory 521 may be connected by using a bus (bus) structure and/or another connection medium.

Based on the structure shown in FIG. 5, when the communication apparatus 500 needs to send data, the processor 522 may perform baseband processing on the to-be-sent data, and output the baseband signal to the radio frequency unit. After performing radio frequency processing on the baseband signal, the radio frequency unit sends a radio frequency signal in a form of an electromagnetic wave through the antenna. When data is sent to the communication apparatus 500, the radio frequency unit receives the radio frequency signal through the antenna, converts the radio frequency signal into the baseband signal, and outputs the baseband signal to the processor 522. The processor 522 converts the baseband signal into data, and processes the data.

Based on the structure shown in FIG. 5, the transceiver 510 may be configured to perform the foregoing step performed by the transceiver module 301; and/or the processor 522 may be configured to invoke instructions in the memory 521 to perform the foregoing step performed by the processing module 302.

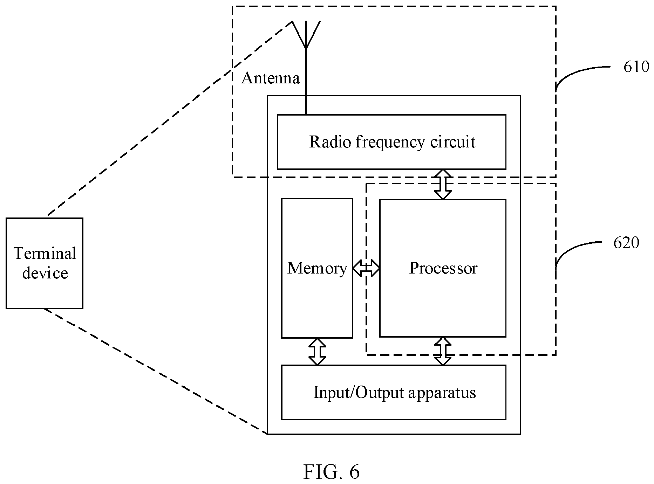

FIG. 6 is a simplified schematic diagram of a structure of a terminal device. For ease of understanding and illustration, an example in which the terminal device is a mobile phone is used in FIG. 6. As shown in FIG. 6, the terminal device includes a processor, a memory, a radio frequency circuit, an antenna, and an input/output apparatus. The processor is mainly configured to: process a communication protocol and communication data, control a vehicle-mounted unit, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in an electromagnetic wave form. The input/output apparatus, for example, a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data, and outputs the baseband signal to the radio frequency circuit. After performing radio frequency processing on the baseband signal, the radio frequency unit sends a radio frequency signal in a form of an electromagnetic wave through the antenna. When data is sent to the device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 6 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in this embodiment of this application. In this embodiment of this application, an antenna and a radio frequency circuit that have a transceiver function may be considered as a transceiver unit of the apparatus, and a processor having a processing function may be considered as a processing unit of the apparatus. As shown in FIG. 6, the apparatus includes a transceiver unit 610 and a processing unit 620. The transceiver unit 610 may also be referred to as a transceiver, a transceiver machine, a transceiver apparatus, or the like. The processing unit 620 may also be referred to as a processor, a processing board, a processing module, a processing apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. That is, the transceiver unit 610 includes the receiving unit and the sending unit. The transceiver unit 610 sometimes may also be referred to as a transceiver machine, a transceiver, a transceiver circuit, or the like. The receiving unit may also be sometimes referred to as a receiver machine, a receiver, a receiver circuit, or the like. The sending unit sometimes may also be referred to as a transmitter machine, a transmitter, a transmitter circuit, or the like.

It should be understood that the transceiver unit 610 is configured to perform a sending operation and a receiving operation of a terminal device side in the foregoing method embodiments, and the processing unit 620 is configured to perform operations, other than the sending and receiving operations, on the terminal device in the foregoing method embodiments.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include more network devices and more terminal devices. For example, the communication system includes a network device and a terminal device that are configured to implement a related function in the embodiment in FIG. 2.

The network device is configured to implement a related function of a network device part in embodiments of this application, for example, configured to implement the related function of the network device part in the embodiment shown in FIG. 2. The terminal device is configured to implement a related function of a terminal device part in embodiments of this application, for example, configured to implement the related function of the terminal device in the embodiment shown in FIG. 2. For details, refer to the related descriptions in the method embodiments. Details are not described herein again.

An embodiment of this application further provides a computer-readable storage medium, including instructions. When the instructions are run on a computer, the computer is enabled to perform the method performed by the network device or the terminal device in FIG. 2.

An embodiment of this application further provides a computer program product, including instructions. When the instructions are run on a computer, the computer is enabled to perform the method performed by the network device or the terminal device in FIG. 2.

An embodiment of this application provides a chip system. The chip system includes a processor, may further include a memory, and is configured to implement a function of the network device or the terminal device in the foregoing methods. The chip system may include a chip, or may include a chip and another discrete device.

All or a part of the methods in embodiments of this application may be implemented by using software, hardware, firmware, or any combination thereof. When the software is used for implementation, all or some of the methods may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

## Claims

1. A communication method, applied to a terminal device having a wake-up radio WUR capability, wherein the method comprises:
receiving wake-up information from a network device; and
switching from a first state to a second state in response to the wake-up information, wherein
the wake-up information comprises one or more of the following information:
a first cell bar indication, indicating whether a terminal device is allowed to select or reselect a first cell;
a second cell bar indication, indicating whether a terminal device having a WUR capability is allowed to select or reselect a first cell;
a resource configuration change indication, indicating that a WUR resource changes;
a resource configuration, indicating a WUR resource;
cell identification information, indicating an identifier of a cell to which a terminal device belongs; or
an alarm information indication, indicating an alarm information notification.

2. The method according to claim 1, wherein
the first state is a doze state, and the second state is an awake state.

3. The method according to claim 1 or 2, wherein the method further comprises:
the wake-up information comprises the first cell bar indication, wherein the first cell bar indication indicates that access to a current cell of the terminal device is barred, and the terminal device performs cell selection or cell reselection after switching to the second state;
the wake-up information comprises the second cell bar indication, wherein the second cell bar indication indicates that access to a current cell of the terminal device is barred, and the terminal device performs cell selection or cell reselection after switching to the second state;
the wake-up information comprises the resource configuration change indication, and the terminal device obtains a WUR resource configuration after switching to the second state; or
the wake-up information comprises the alarm information indication, and the terminal device obtains alarm information after switching to the second state.

4. The method according to any one of claims 1 to 3, wherein the wake-up information further comprises area information, and the area information comprises tracking area TA information and/or radio access network-based notification area RNA information.

5. The method according to any one of claims 1 to 4, wherein the wake-up information further comprises a first identifier, and the first identifier is an identifier of the terminal device or a group identifier of the terminal device.

6. The method according to claim 5, wherein the wake-up information further comprises identification type information of the first identifier, and the identification type information indicates that the first identifier is the identifier of the terminal device or the group identifier of the terminal device.

7. The method according to claim 5, wherein the wake-up information further comprises length information of the first identifier.

8. A communication method, comprising:
generating wake-up information; and
sending the wake-up information, wherein the wake-up information comprises one or more of the following information:
a first cell bar indication, indicating whether a terminal device is allowed to select or reselect a cell;
a second cell bar indication, indicating whether a terminal device having a WUR capability is allowed to select or reselect a cell;
a resource configuration change indication, indicating that a WUR resource changes;
a resource configuration, indicating a WUR resource;
cell identification information, indicating an identifier of a cell to which a terminal device belongs; or
an alarm information indication, indicating an alarm information notification.

9. The method according to claim 8, wherein the wake-up information further comprises area information, and the area information comprises tracking area TA information and/or radio access network-based notification area RNA information.

10. The method according to claim 8 or 9, wherein the wake-up information further comprises a first identifier, and the first identifier is an identifier of the terminal device, or the first identifier is a group identifier of the terminal device.

11. The method according to claim 10, wherein the wake-up information further comprises identification type information of the first identifier, and the identification type information indicates that the first identifier is the identifier of the terminal device or the group identifier of the terminal device.

12. The method according to claim 10, wherein the wake-up information further comprises length information of the first identifier.

13. A communication apparatus, wherein the communication apparatus has a wake-up radio WUR capability, the communication apparatus comprises a processing module and a transceiver module, the transceiver module is configured to receive wake-up information from a network device, and the processing module is configured to switch from a first state to a second state in response to the wake-up information, wherein
the wake-up information comprises one or more of the following information:
a first cell bar indication, indicating whether a terminal device is allowed to select or reselect a first cell;
a second cell bar indication, indicating whether a terminal device having a WUR capability is allowed to select or reselect a first cell;
a resource configuration change indication, indicating that a WUR resource changes;
a resource configuration, indicating a WUR resource;
cell identification information, indicating an identifier of a cell to which a terminal device belongs; or
an alarm information indication, indicating an alarm information notification.

14. The communication apparatus according to claim 13, wherein
the first state is a doze state, and the second state is an awake state.

15. The communication apparatus according to claim 13 or 14, wherein the processing module is further configured to:
if the wake-up information comprises the first cell bar indication, and the first cell bar indication indicates that access to a current cell of the terminal device is barred, perform cell selection or cell reselection after switching to the second state;
if the wake-up information comprises the second cell bar indication, and the second cell bar indication indicates that access to a current cell of the terminal device is barred, perform cell selection or cell reselection after switching to the second state;
if the wake-up information comprises the resource configuration change indication, obtain a WUR resource configuration after switching to the second state; or
if the wake-up information comprises the alarm information indication, obtain alarm information after switching to the second state.

16. The communication apparatus according to any one of claims 13 to 15, wherein the wake-up information further comprises area information, and the area information comprises tracking area TA information and/or radio access network-based notification area RNA information.

17. The communication apparatus according to any one of claims 13 to 16, wherein the wake-up information further comprises a first identifier, and the first identifier is an identifier of the communication apparatus or a group identifier of the communication apparatus.

18. The communication apparatus according to claim 17, wherein the wake-up information further comprises identification type information of the first identifier, and the identification type information indicates that the first identifier is the identifier of the communication apparatus or the group identifier of the communication apparatus.

19. The communication apparatus according to claim 18, wherein the wake-up information further comprises length information of the first identifier.

20. A communication apparatus, wherein the communication apparatus comprises a processing module and a transceiver module;
the processing module is configured to generate wake-up information; and
the transceiver module is configured to send the wake-up information, wherein the wake-up information comprises one or more of the following information:
a first cell bar indication, indicating whether a terminal device is allowed to select or reselect a cell;
a second cell bar indication, indicating whether a terminal device having a WUR capability is allowed to select or reselect a cell;
a resource configuration change indication, indicating that a WUR resource changes;
a resource configuration, indicating a WUR resource;
cell identification information, indicating an identifier of a cell to which a terminal device belongs; or
an alarm information indication, indicating an alarm information notification.

21. The communication apparatus according to claim 20, wherein the wake-up information further comprises area information, and the area information comprises tracking area TA information and/or radio access network-based notification area RNA information.

22. The communication apparatus according to claim 20 or 21, wherein the wake-up information further comprises a first identifier, and the first identifier is an identifier of the terminal device, or the first identifier is a group identifier of the terminal device.

23. The communication apparatus according to claim 22, wherein the wake-up information further comprises identification type information of the first identifier, and the identification type information indicates that the first identifier is the identifier of the terminal device or the group identifier of the terminal device.

24. The communication apparatus according to claim 22, wherein the wake-up information further comprises length information of the first identifier.

25. A communication apparatus, wherein the communication apparatus comprises a processor, a communication interface, and a memory, and the processor is coupled to the communication interface and is configured to invoke computer instructions in the memory, to enable the communication apparatus to perform the method according to any one of claims 1 to 7.

26. A communication apparatus, wherein the communication apparatus comprises a processor, a communication interface, and a memory, and the processor is coupled to the communication interface and is configured to invoke computer instructions in the memory, to enable the communication apparatus to perform the method according to any one of claims 8 to 12.

27. A computer-readable storage medium, wherein the computer-readable storage medium stores computer instructions; and when the computer instructions are executed, a computer is enabled to perform the method according to any one of claims 1 to 7, or a computer is enabled to perform the method according to any one of claims 8 to 12.
